# EUROPÄISCHE PATENTSCHRIFT

(11) **EP 1 177 333 B1**
(45) Veröffentlichungstag und Bekanntmachung des Hinweises auf die Patenterteilung: **01.10.2003**
(21) Anmeldenummer: 00920664.0
(22) Anmeldetag: 05.04.2000
(51) Int. Cl.: C25F 3/12, H01L 21/3063, B01J 19/00, B01D 67/00, B01D 71/02

(54) **VERFAHREN ZUR HERSTELLUNG EINES FILTERS**
METHOD OF PRODUCING A FILTER
PROCEDE DE PRODUCTION D'UN FILTRE

(30) Priorität: 30.04.1999 DE 19919903
(43) Veröffentlichungstag der Anmeldung: 06.02.2002
(73) Patentinhaber: NFT Nano-Filtertechnik GmbH, 61348 Bad Homburg v.d.H. (DE)
(72) Erfinder: HOFMANN, Wilfried, D-81667 München (DE)
(74) Vertreter: von Bülow, Tam, Dr.
(86) Internationale Anmeldenummer: EP0003030
(87) Internationale Veröffentlichungsnummer: WO00066815

(56) Entgegenhaltungen:
- EP-A- 0 018 556
- EP-A- 0 296 348
- WO-A-97/04340
- WO-A-99/05344
- DE-C- 4 202 454
- US-A- 4 369 099
- US-A- 5 348 627

## Beschreibung

Die Erfindung betrifft ein Verfahren zur Herstellung eines Filters gemäß dem Oberbegriff des Patentanspruches 1.

Ein derartiges Verfahren ist aus der WO 99/05344 bekannt. Mit diesem Verfahren werden in einen n- oder p-dotierten Silizium-Rohling, der als Anode oder Katode verschaltet ist, feine Filterporen geätzt. Eine erste Seite des Rohlings wird dabei in eine Ätzlösung eingetaucht, in der eine Gegenelektrode zur Erzeugung eines Ätzstroms angeordnet ist. Gleichzeitig wird eine der ersten Seite gegenüberliegende zweite Seite des Silizium-Rohlings mit Licht betrahlt, wodurch im Rohling Minoritätsladungsträger erzeugt werden. Der Rohling bildet somit eine "Arbeitselektrode", die in Abhängigkeit von seiner Dotierung, der Ätzstromdichte und der chemischen Zusammensetzung der Ätzflüssigkeit elektrochemisch perforiert wird.

Mit diesem Verfahren lassen sich Feinstfilter herstellen, deren Strukturabmessungen, d.h. deren Porendurchmesser bzw. Porenabstände im Mikrometerbereich (µm) bis Nanometerbereich (nm) liegen. Werden die Strukturabmessungen kleiner als ca. 100 Nanometer, so kann jedoch die Mikrostruktur des Filters porös bzw. schwammartig werden.

Ein Problem hierbei ist, daß der Ätzvorgang nicht nur am "Porenboden", sondern auch quer zu den Poren erfolgt, was dazu führen kann, daß die Porenquerschnitte über die Porenlänge nicht exakt konstant gehalten werden und ferner, daß nebeneinanderliegende Poren miteinander verbunden werden. Solche "Querätzungen" treten insbesondere dann auf, wenn Minoritätsladungsträger bzw. sogenannte "Defektelektronen" zu den Porenwänden des in Bearbeitung befindlichen Rohlings gelangen. Die Defektelektronen sind "Löcher" im Valenzband der Rohlingatome und verhalten sich wie positiv geladene Teilchen.

In der US 5,139,624 ist ein weiteres Verfahren zur Herstellung von Feinstfiltern durch elektrochemische Ätzung beschrieben, wobei angegebenen ist, daß der Porendurchmesser vom Ätzstrom bzw. der Dotierstoffkonzentration und der Konzentration der Ätzlösung abhängt.

Die US 5,348,627 beschreibt ein ähnliches Ätzverfahren, bei dem der Rohling zur Erzeugung von Löchern im Valenzband mit Licht bestrahlt wird, wobei die Lichtintensität wahlweise verändert werden kann, um dadurch die Ätzrate zu verändern. Als Lichtquelle wird dabei eine Breitbandlichtquelle oder eine monochromatische Lichtquelle verwendet.

Die DE 4 202 454 C1 beschreibt ein ähnliches Verfahren zur Herstellung eines Filters, das darauf abzielt, Poren zu erzeugen, deren Querschnitt nicht konstant ist, sondern höhlenartige Erweiterungen aufweist. Derartige Querschnittserweiterungen werden durch eine Veränderung der Stromdichte in der Substratscheibe erreicht, wobei angegeben ist, daß eine Querschnittsvergrößerung durch eine Erhöhung der Beleuchtungsstärke erreicht wird.

Ferner beschreibt die EP 0 296 348 A1 ein Ätzverfahren, bei dem die Elektrolyse durch Beleuchtung eines Siliziumkörpers von der Rückseite her initiiert wird und die Beleuchtung konstant oder zeitlich variiert aufrechterhalten wird, um den Ätzstrom durch die Bildung von Minoritätsladungsträgern zu steuern. Der Ätzstrom ist dabei eine Funktion des auf den Siliziumkörper auftreffenden Lichts und bestimmt hauptsächlich die Lochbreite.

Aufgabe der vorliegenden Erfindung ist es, das eingangs genannte Verfahren dahingehend zu verbessern, daß über die gesamte Länge der Filterporen ein annähernd gleichbleibender vorgebbarer Porendurchmesser eingehalten werden kann.

Diese Aufgabe wird durch die im Patentanspruch 1 angegebenen Merkmale gelöst. Vorteilhafte Ausgestaltungen und Weiterbildungen der Erfindung sind den Unteransprüchen zu entnehmen.

Das Grundprinzip der Erfindung besteht darin, die Erzeugungsrate der Minoritätsladungsträger, die während des Ätzvorgangs in dem zu ätzenden Rohling gebildet werden, in Abhängigkeit des Ätzfortschritts, d.h. mit zunehmender Porentiefe zu verringern.

Der hierbei verwendete Rohling besteht aus einem n- oder p-dotiertem ätzbarem Halbleitermaterial, wie z.B. Silizium, GaAs usw., der je nach Dotierung als Anode oder Katode geschaltet ist und mit mindestens einer ersten Seite in eine Ätzflüssigkeit eingetaucht ist, in der eine Gegenelektrode angeordnet ist. Dem Rohling wird während des Ätzvorgangs Aktivierungsenergie zugeführt, z.B. durch Bestrahlung mit Licht oder durch Wärmezufuhr. Durch die Aktivierung einzelner Atome des Rohlings werden Minoritätsladungsträger bzw. Defektelektronen erzeugt, wobei die Erzeugungsrate mit der pro Zeiteinheit zugeführten Aktivierungsenergie bzw. mit der zugeführten Aktivierungsleistung zunimmt. Ist der Rohling z.B. als Anode geschaltet, d.h. positiv geladen, so wandern die positiv geladenen Defektelektronen bzw. Löcher zur Außenseite des Rohlings und zwar zur derjenigen Seite, die der negativ geladenen Gegenelektrode, d.h. der Katode zugewandt ist.

Das sich im Rohling einstellende elektrische Feld wird dabei selbst durch kleinste Vertiefungen bzw. Unregelmäßigkeiten in der planaren Oberfläche des Rohlings zu deren Spitzen oder Bögen hin "verbogen", wobei die Defektelektronen dem elektrischen Feld folgen, was dazu führt, daß die Ätzung primär an den Böden oder Spitzen der Vertiefungen stattfindet und sich somit feine Poren bilden.

Es hat sich herausgestellt, daß mit zunehmendem Ätzfortschritt, d.h. mit zunehmender Porentiefe die Defektelektronen nicht nur zu den "Porenböden" wandern, wo der Ätzfortschritt primär stattfinden soll, sondern auch zu den Porenwänden, was zur Vergrößerung des Porendurchmessers führen würde. Erfindungsgemäß kann eine solche "Querätzung" an den Porenwänden vermieden werden, wenn die dem Rohling zugeführte Aktivierungsleistung bzw. die pro Zeiteinheit zugeführte Aktivierungsenergie in Abhängigkeit vom Ätzfortschritt bzw. mit zunehmender Porentiefe verringert wird. Somit lassen sich auch sehr feine Poren mit annähernd konstantem Querschnitt herstellen, deren Durchmesser im Bereich von einigen Hundert Mikrometern bis zu 1 Nanometer liegen kann.

Aus dem Stand der Technik ist zwar bekannt, die Bestrahlungsintensität zur Vergrößerung des Porenquerschnitts zu erhöhen, es wurde jedoch offensichtlich bislang nicht erkannt, daß zur Ätzung von Poren mit konstantem Querschnitt, die dem Rohling zugeführte Aktivierungsenergie mit zunehmender Porentiefe verringert werden muß. Im Gegensatz zum Stand der Technik läßt sich mit der Erfindung somit ein vorgebbarer Porendurchmesser über die gesamte Porenlänge annähernd konstant halten.

Wird die Aktivierungsenergie durch Bestrahlung mit Licht zugeführt, so wird vorzugsweise diejenige Seite des Rohlings bestrahlt, die der in die Ätzflüssigkeit eingetauchten Seite gegenüberliegt. Die zugeführte Aktivierungsenergie kann beispielsweise durch sequentielles Ein- bzw. Ausschalten der Lichtquelle oder durch allmähliches Verringern der Lichtintensität, d.h. durch Dimmen der Lichtquelle erreicht werden. Dabei kann sowohl eine Lichtquelle mit breitem Frequenzspektrum oder eine monochromatische Lichtquelle verwendet werden, deren Frequenz auf das Rohlingmaterial abgestimmt ist.

Nach einer Weiterbildung der Erfindung werden vor dem elektrochemischen Ätzen des Rohlings an dessen ersten Seite "Startvertiefungen" für die zu ätzenden Poren erzeugt, deren Abstand und Anordnung dem gewünschten Porenabstand der Porenverteilung entspricht. Die Startvertiefungen können z.B. unter Verwendung einer Lochmaske vorgeätzt werden oder mit Laserstrahlen erzeugt werden, wodurch ein Filter mit einer sehr gleichmäßigen Mikro- bzw. Porenstruktur herstellbar ist.

Die Dotierstoffkonzentration des Rohlings kann beispielsweise zwischen 10¹⁶ und 10¹⁹cm⁻³ oder höher liegen. Ferner ist es möglich, den Rohling mit unterschiedlichen Atomsorten und gegebenenfalls unterschiedlichen Dotierstoffkonzentrationen zu dotieren. Die einzelnen Dotierstoffe haben dann nämlich charakteristische Aktivierungsenergien und sind somit einzeln aktivierbar, d.h. bei Verwendung von monochromatischem Licht dann durch eine Veränderung der Wellenlänge des Lichts ein Dotierstoff nach dem anderen "angesprochen" werden. Vorzugsweise beginnt man dabei mit dem höchstdotierten bzw. dem am höchsten konzentrierten Dotierungsstoff und geht mit zunehmendem Ätzfortschritt schrittweise zu den schwächer konzentrierten Dotierstoffen über, um dadurch schrittweise die Erzeugung von Defektelektronen zu verringern. Unterstützend kann vorgesehen sein, daß die Dotierstoffkonzentration in Ätzrichtung abnimmt, was z.B. dadurch erreicht wird, daß man beim Dotieren den Dotierstoff von der ersten Seiten eindiffundieren läßt.

Nach einer Weiterbildung der Erfindung kann vorgesehen sein, daß bestimmte Bereiche des Rohlings nur relativ schwach bzw. undotiert sind und somit während des Ätzvorgangs kaum bzw. überhaupt nicht vom Ätzmittel angegriffen werden. Hierdurch lassen sich im Rohling ungeätzte "Versteifungsrippen" erzeugen, welche die mechanische Festigkeit des herzustellenden Filters erhöhen und die Handhabung verbessern.

Nach einer Weiterbildung der Erfindung wird während des Ätzvorgangs ein magnetisches Feld erzeugt, das im wesentlichen senkrecht zur Ätzrichtung gerichtet ist und das dem sich im Rohling einstellenden elektrischen Feld überlagert ist. Somit wird der durch das elektrische Feld hervorgerufenen Ladungsträgerbewegung im Rohling eine durch Lorentzkräfte bedingte magnetisch induzierte Bewegung überlagert, wodurch die Anzahl der zu den Porenwänden gelangenden Defektelektronen weiter verringert wird. Unterstützend kann vorgesehen sein, daß die magnetische Flußdichte in Ätzrichtung abnimmt, was eine noch günstigere Ablenkung der Defektelektronen ermöglicht.

Im folgenden wird die Erfindung anhand von Ausführungsbeispielen im Zusammenhang mit der Zeichnung näher erläutert. Es zeigen:
- Fig. 1: eine schematische Darstellung einer Anordnung zur Durchführung des Verfahrens;
- Fig. 2: einen Querschnitt durch den Rohling kurz nach Beginn des Ätzvorganges;
- Fig. 3: eine unerwünschte Verteilung der Defektelektronen während des Ätzvorganges;
- Fig. 4: eine durch die Erfindung erreichbare günstige Verteilung des Defektelektronen;
- Fig. 5: ein Ausführungsbeispiel, bei dem dem elektrischen Feld ein magnetisches Feld überlagert ist;
- Fig. 6: ein Diagramm zur Erläuterung der Wirkungsweise des magnetischen Feldes;
- Fig. 7: ein Energieschema des Rohlingmaterials; und
- Fig. 8: eine schematische Darstellung eines Filters mit Versteifungsrippen.

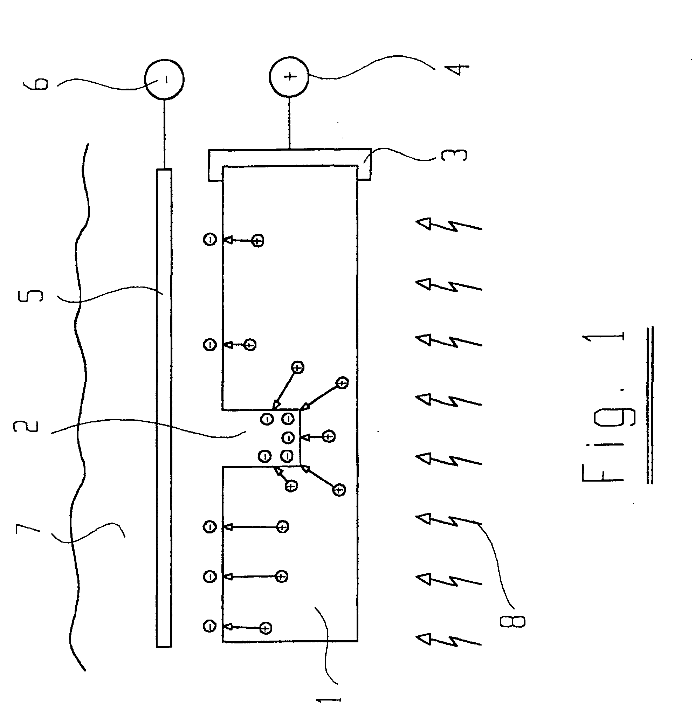

Fig. 1 zeigt eine Prinzipskizze aus der eingangs erwähnten WO 99/06344, auf deren Inhalt hiermit in vollem Umfang Bezug genommen wird. Ein Rohling 1 in Form eines Siliziumplättchens, das hier schwach n-dotiert ist, weist an seiner Oberfläche eine Vertiefung 2 auf. Der Rohling 1 ist über eine elektrisch leitfähige Halterung 3 mit der Anode 4 einer Stromquelle verbunden. Eine Gegenelektrode 5 ist mit der Katode 6 der Stromquelle verbunden. Durch das sich ausbildende elektrische Feld ist die Feldliniendichte im Bereich der Vertiefung 2 größer als in den übrigen Bereichen. Daher gelangen die mit "-" gekennzeichneten Ladungsträger der Ätzflüssigkeit bevorzugt zum Boden der Vertiefung 2, wodurch die Ätzwirkung der an der Oberseite des Rohlings 1 angreifenden Ätzflüssigkeit 7 an diesen Stellen verstärkt ist. Die mit "+" gekennzeichneten Minoritätsladungsträger bzw. Defektelektronen im Rohling 1 werden durch Beleuchten der Rohlingunterseite erzeugt, was durch Lichtpfeile 8 angedeutet ist. Um Vertiefungen 2 bzw. Poren zu erhalten, deren Porendurchmesser über die Porenlänge annähernd konstant ist, wird die Erzeugungsrate der Minoritätsladungsträger mit zunehmendem Ätzfortschritt verringert, was durch Verringerung der Lichtintensität erreicht werden kann und im Zusammenhang mit den folgenden Figuren näher erläutert wird.

Der Rohling 1 kann in seinem ganzen Volumen relativ homogen dotiert sein, z.B. mit einer Dotierstoffkonzentration zwischen 10¹⁶ und 10¹⁹cm⁻³. Alternativ dazu kann jedoch auch vorgesehen sein, daß die Dotierstoffkonzentration in Ätzrichtung abnimmt, d.h. von der der Gegenelektrode 5 zugewandten Seite des Rohlings 1 zur gegenüberliegenden Seite, was eine Verringerung der Erzeugungsrate der Defektelektronen mit zunehmendem Ätzfortschritt unterstützt. Ferner können mehrere verschiedene Dotierstoffe in unterschiedlichen Konzentrationen im Rohling 1 enthalten sein, die durch zugeordnete Wellenlängen aktivierbar sind, was eine schrittweise Verringerung der Defektelektronenerzeugungsrate ermöglicht, indem die einzelnen Dotierstoffe durch Licht mit einer dotierstoffspezifischen Wellenlänge angeregt werden.

Der Ätzvorgang wird nun solange durchgeführt, bis die Vertiefung 2 vollständig durch den Rohling 1 hindurchgeätzt ist und ein Durchgangsloch bildet. Der Durchmesser des Durchgangslochs hängt wesentlich von der Dotierungskonzentration des Rohlings 1 ab, da diese das sich im Rohling 1 ausbildende elektrische Feld beeinflußt. Je schwächer die Dotierung, um so geringer wird der Porendurchmesser, da der Ätzvorgang dann überwiegend am Porenboden bzw. am Boden der Vertiefung 2 stattfindet und die Seitenwände der Vertiefung 2 weniger weggeätzt werden.

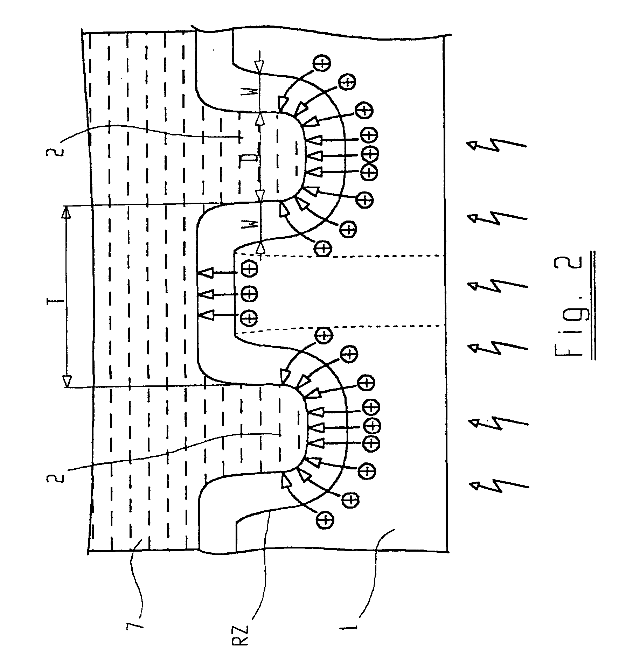

Fig. 2 zeigt einen Querschnitt durch den Rohling 1 kurz nach Beginn des Ätzvorganges. Durch die angelegte Spannung (vgl. Fig. 1) bildet sich im Rohling 1 eine Raumladungszone RZ bzw. eine sogenannte Verarmungszone aus, die hier durch eine gestrichelte Linie dargestellt ist und die eine mittlere Breite W hat. Die Raumladungszone RZ ist mit einem pn-Übergang vergleichbar, über den die angelegte Spannung abfällt. Durch die Vertiefung 2 wird das elektrische Feld in der Raumladungszone RZ so verändert, wie es durch die Bewegungspfeile der Defektelektronen, die durch "+"-Symbole dargestellt sind, angedeutet ist. Die Vertiefungen 2 haben einen im wesentlichen konstanten Durchmesser D, der dem Porendurchmesser des zu ätzenden Filters entspricht. Der Porendurchmesser D und die die Pore umschließende Raumladungszone der Breite W bilden somit einen Bereich der Breite D+2W, in dem die Defektelektronen zur Pore 2 wandern und diese primär am Porenboden weiter ätzen. Um Poren mit annähernd konstantem Durchmesser zu erreichen, ist es wichtig, daß im Bereich des Porenbodens die Anzahl der gesammelten Defektelektronen wesentlich größer ist als im Bereich zwischen zwei benachbarten Poren, die einen Abstand T voneinander haben. Die Ätzung findet somit primär in denjenigen Bereichen statt, in denen die Dichte an Defektelektronen und Reaktanden, d.h. des Ätzmittels hoch sind, d.h. an den Böden der Vertiefungen 2. Im Bereich zwischen den Poren ist der Ätzabtrag hingegen wesentlich geringer.

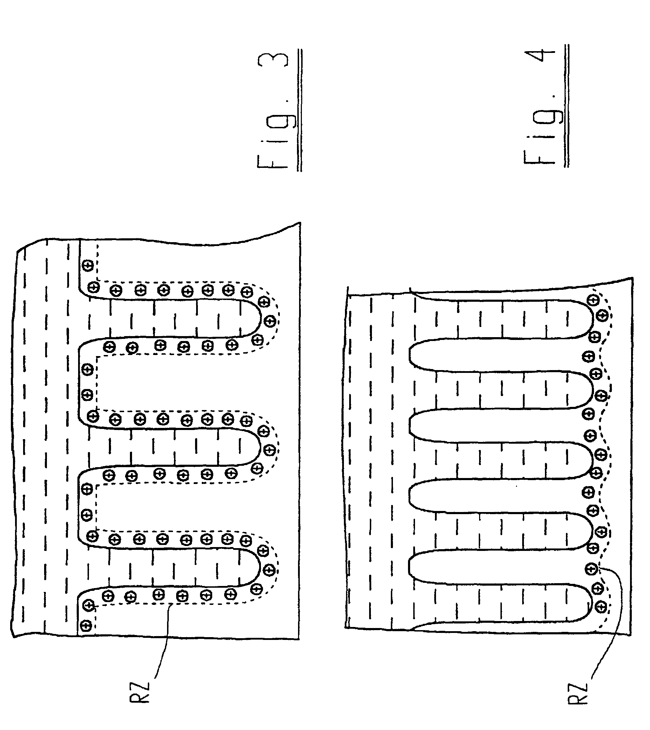

Werden, wie in Fig. 3 schematisch dargestellt, die Poren im Verlauf des Ätzvorgangs tiefer, so breitet sich auch die Raumladungszone RZ entsprechend aus. Ist, wie ferner in Fig. 3 zu erkennen ist, der Abstand einzelner Poren in Bezug auf die Breite der Raumladungszone relativ groß und bleibt die Erzeugungsrate der Defektelektronen so hoch wie zu Beginn des Ätzvorganges, was dem Stand der Technik entspricht, dann gelangen auch zahlreiche Defektelektronen zu den Porenwänden und bewirken dort eine unerwünschte Querätzung. Der in Fig. 3 dargestellte Zustand würde somit zu einer ungewollten und unkontrollierten einer Aufweitung des Porenquerschnitts führen.

Gelingt es nun, dafür zu sorgen, daß sich die Raumladungszone RZ auch bei kleinen Porendurchmessern während des gesamten Ätzverlaufs, d.h. auch bei zunehmender Porentiefe auch zwischen den Poren vollständig ausbildet, so kann ein Ätzabtrag an den Porenwänden vermieden werden, was in Fig. 4 dargestellt ist.

Wie aus Fig. 4 ersichtlich ist, verläuft die Grenze der Raumladungszone RZ "unterhalb" der Porenböden, so daß sich die Defektelektronen primär in der Nähe der Porenböden sammeln und der Ätzabtrag auch primär nur im Bereich der Porenböden stattfindet.

Die in Fig. 4 dargestellte Situation kann dadurch erreicht werden, daß die Erzeugungsrate der Defektelektronen mit zunehmendem Ätzabtrag, d.h. mit zunehmender Porentiefe verringert wird. Dies ist zum einen durch eine Verringerung der zugeführten Strahlungsleistung (vgl. Fig. 1) oder durch eine Verringerung der Spannung zwischen dem Rohling und der Referenzelektrode möglich. Eine weitere Verbesserung läßt sich durch eine geeignete Vorstrukturierung des Rohlings vor Beginn des Ätzvorganges erreichen, und zwar dadurch, daß die Abstände der Startvertiefungen für die zu ätzenden Poren so gewählt werden, daß die gewünschte Dicke der Porenwände bzw. die Abstände T (vgl. Fig. 2) einzelner Poren und die Breite der W der sich einstellenden Raumladungszone die Bedingung T < 2W erfüllen.

Diese Bedingung kann durch eine Vorätzung mit entsprechendem Abstand der Startvertiefungen eingehalten werden. Ergänzend kann auch vorgesehen sein, daß die Dotierstoffkonzentration in Ätzrichtung abnimmt bzw. daß mehrere unterschiedliche Dotierstoffe verschiedener Konzentrationen vorgesehen sind, die entsprechend nacheinander durch monochromatisches Licht angeregt werden, was eine schrittweise Verringerung der vorhandenen Defektelektronen ermöglicht.

Die Erzeugungsrate der Defektelektronen im Rohling, d.h. die Aktivierungsenergiezufuhr wird dabei so gesteuert, daß im wesentlichen stets alle erzeugten Defektelektronen beim Ätzvorgang verbraucht werden. Es ist also eine entsprechend konzentrierte Ätzflüssigkeit erforderlich, d.h. ein Überschuß an Reaktanden im Ätzmittel in Bezug auf die Zahl der Defektelektronen. Je nach Anzahl von Defektelektronen im Vergleich zur Anzahl vorhandener Reaktanden im Ätzmittel tritt an der ersten Seite des Rohlings Porenbildung oder sogenanntes Elektropolieren auf.

Wie in Fig. 1 gezeigt erfolgt die "Steuerung" der Defektelektronen beispielsweise durch Steuerung der Beleuchtung des Rohlings 1. Eine Möglichkeit besteht darin, während des Ätzvorgangs die Bestrahlungsstärke zu verändern, wobei durch zeitgesteuertes Verringern der Bestrahlungsstärke die Zahl der erzeugten Defektelektronen verringert werden kann. Hierzu kann beispielsweise eine gepulste bzw. eine "Intervallbestrahlung" mit Strahlungsintervallen und Strahlungspausen vorgesehen sein, wobei die Lichtquelle einfach ein- und ausgeschaltet werden kann. Die Intervallängen werden dabei der momentanen Porentiefe angepaßt. Beispielsweise sollen nach jedem Bestrahlungsintervall erst alle während dieses Intervalls erzeugten Defektelektronen verbraucht werden, bevor im nächsten Bestrahlungsintervall neue Defektelektronen erzeugt werden. Eine geeignete Zeitfolge kann vorher empirisch bestimmt werden. Alternativ dazu kann auch eine Shutter- bzw. Blendentechnik verwendet werden, bei der zwischen der Lichtquelle und dem Rohling eine öffenbare Abdeckung angeordnet ist. Ferner kann eine Lichtquelle mit einer Blende verwendet werden, die entsprechend öffnet und schließt.

Alternativ dazu kann auch eine "durchstimmbare" Lichtquelle verwendet werden, d.h. ein Dimmer, der beispielsweise entsprechend einem vorprogrammierten Programm von einem Mikroprozessor angesteuert wird und die Leuchtstärke der Lichtquelle dem Ätzfortschritt anpaßt. Selbstverständlich lassen sich bei Verwendung eines Mikroprozessors auch andere Prozeßparameter, wie z.B. die Spannung zwischen dem Rohling 1 und der Gegenelektrode 5 oder die Ätzmittelkonzentration verändern, um eine "Verarmung" an Defektelektronen an den Porenwänden sicherzustellen. Grundsätzlich ist jede Beleuchtungssteuerung geeignet, die eine Verarmung an Defektelektronen an den Porenwänden ermöglicht.

Bei der Vorbehandlung des Rohlings, d.h. bei der Erzeugung der Startvertiefungen können verschiedene Verfahren angewendet werden, z.B. Anätzen mit Kalilauge, Standardlithographieverfahren oder Ionenbeschuß unter Verwendung von Lochmasken oder laserinduzierte Prozesse. Durch eine derartige Vorbehandlung können die Startvertiefungen auf der zu ätzenden Seite des Rohlings in beliebigen gewünschten Mustern oder Anordnugnen erzeugt werden, wobei insbesondere die Porenanzahl pro Filterfläche nach Wunsch exakt festgelegt werden kann.

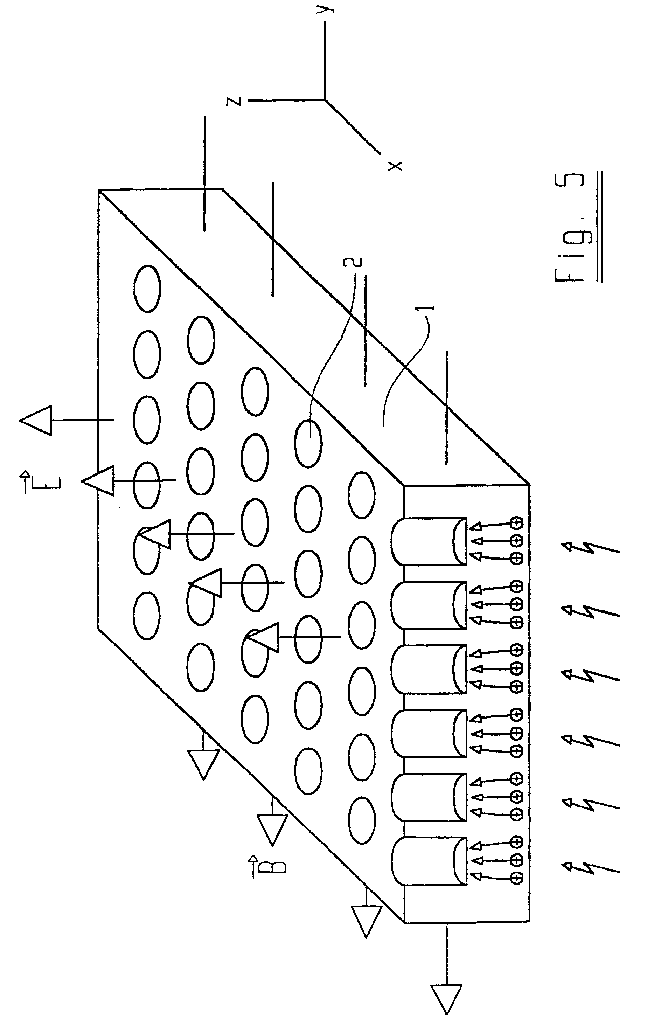

Fig. 5 zeigt ein Ausführungsbeispiel, bei welchem dem sich einstellenden elektrischen Feld E ein dazu senkrecht stehendes magnetisches Feld B überlagert ist. Das elektrische Feld E verläuft hier in Richtung einer positiven Z-Achse und das magnetische Feld B in Richtung einer negativen Y-Achse. Die durch "+" dargestellten Defektelektronen bewegen sich in Richtung des elektrischen Feldes. Infolge dieser Ladungsträgerbewegung im magnetischen Feld entstehen Lorentzkräfte, welche die Defektelektronen senkrecht zum elektrischen Feld E und senkrecht zum magnetischen Feld B ablenken. Die Defektelektronen machen somit Gyro-Bewegungen und können insbesondere durch eine Änderung der Magnetfeldstärke und Verteilung von der mit der Ätzflüssigkeit in Kontakt stehenden Seite des Rohlings 1 (vgl. Fig. 1) besser ferngehalten werden.

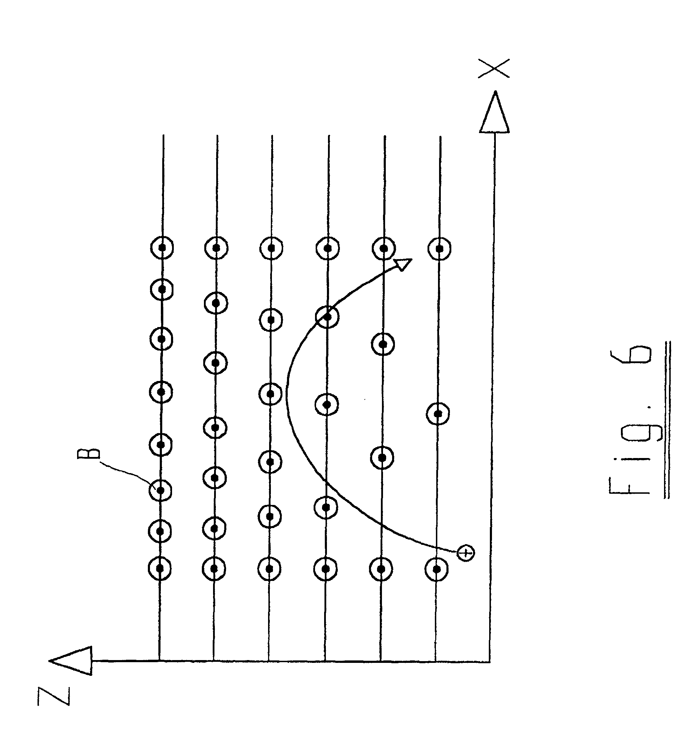

Fig. 6 zeigt schematisch einen Schnitt durch den Rohling 1 in der XZ-Ebene (Fig. 5), wobei das Magnetfeld B durch Kreissymbole dargestellt ist und aus der Zeichenebene austritt. Die Stärke des Magnetfelds B nimmt hier in Z-Richtung, d.h. entgegen der Ätzrichtung zu und wirkt somit wie ein "magnetischer Spiegel", der ein Defektelektron ablenkt, was qualitativ durch einen Pfeil dargestellt ist. Durch diese magnetische Ablenkung wird erreicht, daß nur wenige Defektelektronen zu den Porenwänden gelangen, was die Einhaltung annähernd konstanter Porenquerschnitte ermöglicht.

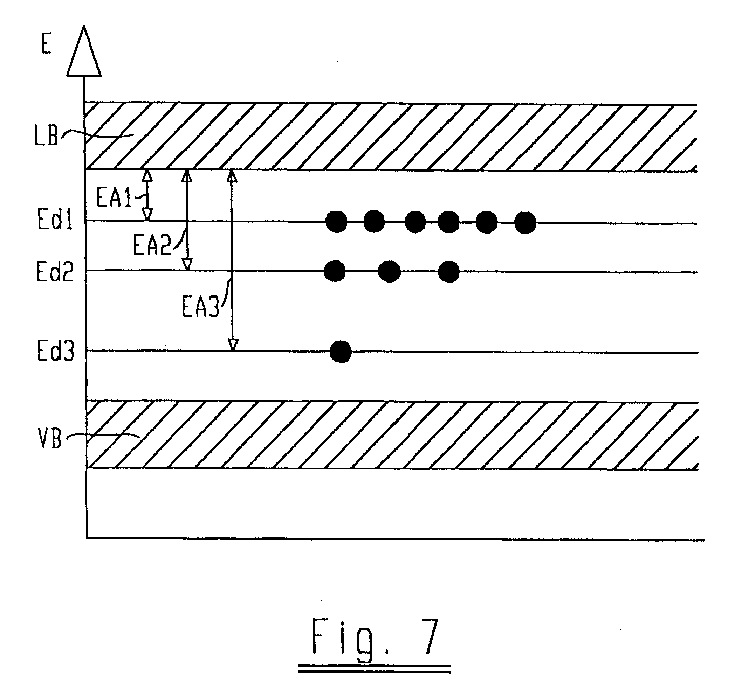

Fig. 7 zeigt ein Energiediagramm eines Rohlings mit einem vollständig mit Elektronen (nicht dargestellt) besetzten Valenzband VB und einem unbesetzten Leitungsband LB, die jeweils zulässige Energiezustände der Elektronen des Rohlings definieren. Zwischen dem Valenzband VB und dem Leitungsband LB ist eine Energielücke, die auch als Verbotene Zone bezeichnet werden kann. Wird ein Halbleiter p- oder n-dotiert, so liegen die Energiezustände der Elektronen der Dotierungsatome zwischen dem Valenzband und dem Leitungsband. In Fig. 7 sind drei solcher Energiezustände Ed1-Ed3 eingezeichnet, die jeweils einem bestimmten Dotierstoff, d.h. einer bestimmten Atomsorte entsprechen. Durch die Anzahl der durch schwarze Punkte dargestellten Elektronen ist angedeutet, daß ein erster Dotierstoff, dessen Energieniveau Ed1 ist, höher konzentriert ist als ein zweiter Dotierstoff und dieser wiederum höher als ein dritter Dotierstoff.

Zur Erzeugung von Defektelektronen müssen Elektronen in das Leitungsband LB gehoben werden. Prinzipiell ist dies durch Aktivieren von Elektronen aus dem Valenzband VB möglich, was jedoch eine relativ hohe Energie erfordert. Durch die Dotierung des Rohlings wird die erforderliche Aktivierungsenergie zur Erzeugung von Defektelektronen verringert, da die Energieniveaus Ed1-Ed3 zwischen dem Valenzband VB und dem Leitungsband LB liegen. Wird der Rohling 1 mit Photonen der Energie EA1 bestrahlt, so können Elektronen vom Energieniveau Ed1 in das Leitungsband gehoben werden. Entsprechend können durch Aktivierungsenergien EA2 bzw. EA3 Elektronen von den Energieniveaus Ed2 bzw. Ed3 in das Leitungsband gehoben werden. Bei Verwendung von monochromatischem Licht kann somit gezielt eine bestimmte Erzeugungsrate an Defektelektronen erreicht werden, entsprechend der jeweiligen Dotierungskonzentrationen der Dotierstoffe. Das bedeutet, daß verschiedene geeignete Dotierstoffsorten in verschiedenen Konzentrationen in den Halbleiterrohling dotiert werden können und dadurch im Energiebandschema eine graduelle Verteilung von Energieniveaus bzw. von verfügbaren Defektelektronen geschaffen werden kann. Somit kann auch durch die Dotierung die Wahrscheinlichkeit verhindert werden, daß Defektelektronen zu den Porenwänden gelangen.

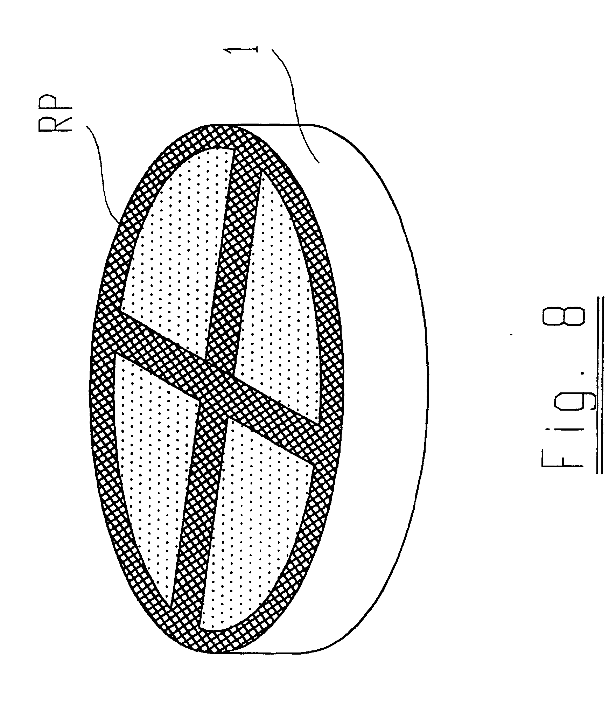

Um eine Verarmung an Defektelektronen an der dem Ätzmittel ausgesetzten Seite des Halbleiterrohlings herzustellen, ist der Rohling 1 nur relativ schwach dotiert, z.B. weniger als 10¹⁹cm⁻³. Ferner kann vorgesehen sein, daß der Rohling in definierten Rippenbereichen RP (vgl. Fig. 8) mit einer Dotierstoffkonzentration unterhalb von 10¹⁶cm⁻³ dotiert ist. Wird als Halbleitermaterial Silizium verwendet, so ist bei einer derart geringen Dotierung sichergestellt, daß die Rippenbereiche RP gegen einen Ätzangriff resistent sind, was die mechanische Festigkeit des geätzten Rohlings verbessert. Darüber hinaus kann dadurch auch die Ätzung in Richtung der Dicke des Rohlings geführt oder kanalisiert werden. Hierdurch können Ätzsegmente im Rohling vorgegeben werden, die die Bewegung von Defektelektronen vorteilhaft beeinflussen. Die Rippenbereiche können sich paralell zur Ätzrichtung durch den gesamten Rohling erstrecken.

Alternativ zu der erläuterten Anwendung, welche die Herstellung von Filtern beschreibt, gibt es weitere Anwendungen. Die erfindungsgemäß perforierten Plättchen können beispielsweise als Mikroresonatoren eingesetzt werden oder als Katalysator, dessen Porenoberflächen beschichtet sind, wodurch sich ein sehr günstiges, d.h. ein großes Oberflächen-/Volumenverhältnis ergibt. Ferner sind Anwendungen in der Mikromechanik möglich, d.h. die Poren können zur Fixierung bzw. Lagerung mikromechanischer Bauteile verwendet werden. Weiter kann ein derart exakt perforiertes Plättchen als "Leuchtanzeige" bzw. Display verwendet werden, wobei die einzelnen Poren mit einzeln ansteuerbaren Leuchtmitteln bestückt sein können.

Die Dotierung des Rohlings kann z.B. durch Neutronenbeschuß erfolgen, durch Beimengung von Dotierstoff in die Kristallschmelze oder durch Erhitzen des Siliziumrohlings bei gleichzeitigem Eindiffundieren von Dotierungsgasen.

## Patentansprüche

1. Verfahren zur Herstellung von Filtern, bei dem ein Rohling aus n- oder p-dotiertem ätzbaren Halbleitermaterial je nach Dotierung als Anode oder Katode verschaltet wird;
eine erste Seite des Rohlings mit einer Ätzlösung, in der eine Gegenelektrode angeordnet ist, in Kontakt gebracht und elektrochemisch geätzt wird;
dem Rohling während des Ätzvorganges Aktivierungsenergie zum Erzeugen von Minoritätsladungsträgern im Rohling zugeführt wird,
**dadurch gekennzeichnet,**
**daß** die pro Zeiteinheit zugeführte Aktivierungsenergie mit zunehmendem Ätzfortschritt verringert wird.

2. Verfahren nach Anspruch 1, **dadurch gekennzeichnet, daß** die Aktivierungsenergie durch Bestrahlen einer der ersten Seite des Rohlings (1) gegenüberliegenden zweiten Seite mit einer Lichtquelle (8) zugeführt wird.

3. Verfahren nach Anspruch 2, **dadurch gekennzeichnet, daß** die Anzahl der pro Zeiteinheit auf den Rohling auftreffenden Photonen mit zunehmendem Ätzfortschritt verringert wird.

4. Verfahren nach einem der Ansprüche 1 bis 3,
**dadurch gekennzeichnet,**
**daß** die Aktivierungsenergie durch Bestrahlen mit einer Breitbandlichtquelle zugeführt wird.

5. Verfahren nach einem der Ansprüche 1 bis 3,
**dadurch gekennzeichnet,**
**daß** die Aktivierungsenergie mit einer monochromatischen Lichtquelle zugeführt wird, wobei die Wellenlänge mit zunehmendem Ätzfortschritt verändert wird.

6. Verfahren nach einem der Ansprüche 2 bis 5,
**dadurch gekennzeichnet,**
**daß** die Bestrahlung des Rohlings (1) während des Ätzvorganges mehrfach unterbrochen wird, wobei aufeinanderfolgende Bestrahlungsintervalle verkürzt und/oder dazwischenliegende Bestrahlungspausen verlängert werden.

7. Verfahren nach einem der Ansprüche 1 bis 6,
**dadurch gekennzeichnet,**
**daß** die Aktivierungsenergie dem Rohling (1) durch Zufuhr von Wärme zugeführt wird.

8. Verfahren nach einem der Ansprüche 1 bis 7,
**dadurch gekennzeichnet,**
**daß** der Rohling (1) vor dem elektro-chemischen Ätzen vorbehandelt wird, wobei zumindest an der ersten Seite des Rohlings Startvertiefungen für zu ätzende Poren erzeugt werden.

9. Verfahren nach Anspruch 8, **dadurch gekennzeichnet, daß** die Startvertiefungen mit einer Lochmaske vorgeätzt werden.

10. Verfahren nach Anspruch 8, **dadurch gekennzeichnet, daß** die Startvertiefungen mit Laserstrahlen erzeugt werden.

11. Verfahren nach einem der Ansprüche 1 bis 10,
**dadurch gekennzeichnet,**
**daß** ein den Rohling (1) durchsetzendes magnetisches Feld (B) erzeugt wird, das den Rohling (1) im wesentlichen senkrecht zu Ätzrichtung durchsetzt.

12. Verfahren nach Anspruch 11, **dadurch gekennzeichnet, daß** die magnetische Flußdichte (B) in Ätzrichtung abnimmt.

13. Verfahren nach einem der Ansprüche 1 bis 12,
**dadurch gekennzeichnet,**
**daß** der Rohling (1) mit einem Dotierstoff mit einer Konzentration von bis zu 10¹⁹cm⁻³ dotiert ist.

14. Verfahren nach einem der Ansprüche 1 bis 13,
**dadurch gekennzeichnet,**
**daß** der Rohling (1) mit mehreren verschiedenen Dotierstoffen und zugeordneten Dotierstoffkonzentrationen dotiert ist.

15. Verfahren nach einem der Ansprüche 1 bis 14,
**dadurch gekennzeichnet,**
**daß** die Dotierstoffkonzentration in Ätzrichtung abnimmt.

16. Verfahren nach einem der Ansprüche 1 bis 15,
**dadurch gekennzeichnet,**
**daß** der Rohling (1) in Teilbereichen mit einer Dotierstoffkonzentration dotiert ist, die kleiner als 10¹⁶cm⁻³.

17. Verfahren nach einem der Ansprüche 1 bis 16,
**dadurch gekennzeichnet,**
**daß** der Rohling (1) primär aus Silizium besteht.

## Claims

1. Method for the production of filters in which a blank of n- or p-doped etchable semiconductor material is connected as an anode or a cathode according to doping; a first side of the blank is brought in contact with an etching solution, in which a counterelectrode is arranged, and electrochemically etched; activation energy to generate minority charge carriers in the blank is supplied to the blank during the etching process,
**characterized by the fact**
that the activation energy supplied per unit time is reduced with increasing etching progress.

2. Method according to Claim 1, **characterized by the fact**
that the activation energy is supplied by irradiation of a second side opposite the first side of the blank (1) with a light source (8).

3. Method according to Claim 2, **characterized by the fact**
that the number of photons impinging on the blank per unit time is reduced with increasing etching progress.

4. Method according to one of Claims 1 to 3, **characterized by the fact**
that the activation energy is supplied by irradiation with a broadband light source.

5. Method according to one of Claims 1 to 3, **characterized by the fact**
that the activation energy is supplied by a monochromatic light source in which the wavelength is varied with increasing etching progress.

6. Method according to one of Claims 2 to 5, **characterized by the fact**
that the irradiation of the blank (1) is repeatedly interrupted during the etching process, the consecutive irradiation intervals being shortened and/or the irradiation pauses in between being lengthened.

7. Method according to one of Claims 1 to 6, **characterized by the fact**
that the activation energy is supplied to the blank (1) by supplying heat.

8. Method according to one of Claims 1 to 7, **characterized by the fact**
that the blank (1) is pretreated before electrochemical etching, in which the start recesses for the pores being etched are generated at least on the first side of the blank.

9. Method according to Claim 8, **characterized by the fact**
that the start recesses are pre-etched with a hole mask.

10. Method according to Claim 8, **characterized by the fact**
that the start recesses are generated with laser beams.

11. Method according to one of Claims 1 to 10, **characterized by the fact**
that a magnetic field (B) that passes through the blank (1) is generated, passing through the blank (1) essentially perpendicular to the etching direction.

12. Method according to Claim 11, **characterized by** the fact
that the magnetic flux density (B) diminishes in the etching direction.

13. Method according to one of Claims 1 to 12,
**characterized by the fact**
that the blank (1) is doped with a dopant with a concentration of up to 10¹⁹ cm⁻³.

14. Method according to one of Claims 1 to 13,
**characterized by the fact**
that the blank (1) is doped with several different dopants and coordinated dopant concentrations.

15. Method according to one of Claims 1 to 14,
**characterized by the fact**
that the dopant concentration diminishes in the etching direction.

16. Method according to one of Claims 1 to 15,
**characterized by the fact**
that the blank (1) is doped in partial regions with a dopant concentration lower than 10¹⁶ cm⁻³.

17. Method according to one of Claims 1 to 16,
**characterized by the fact**
that the blank (1) consists primarily of silicon.

## Revendications

1. Procédé de production de filtres, dans lequel une ébauche en matériau semi-conducteur attaquable dopé N ou P est montée en anode ou cathode, selon le dopage ;
une première face de l'ébauche est mise en contact avec une solution d'attaque dans laquelle est placée une contre-électrode, et elle est attaquée électrochimiquement ;
pendant le processus d'attaque, on amène de l'énergie d'activation à l'ébauche pour produire des porteurs de charge minoritaires dans l'ébauche,
**caractérisé en ce que**
à mesure que progresse l'avancement de l'attaque, on réduit l'énergie d'activation amenée par unité de temps.

2. Procédé selon la revendication 1, **caractérisé en ce que**
on amène l'énergie d'activation en exposant à une source lumineuse (8) une deuxième face de l'ébauche (1) opposée à la première face.

3. Procédé selon la revendication 2, **caractérisé en ce que**
à mesure que progresse l'avancement de l'attaque, on réduit le nombre de photons rencontrant l'ébauche par unité de temps.

4. Procédé selon l'une des revendications 1 à 3,
**caractérisé en ce que**
on amène l'énergie d'activation en effectuant une exposition à une source lumineuse à bande large.

5. Procédé selon l'une des revendications 1 à 3,
**caractérisé en ce que**
on amène l'énergie d'activation avec une source lumineuse monochromatique, à l'occasion de quoi on modifie la longueur d'onde à mesure que progresse l'avancement de l'attaque.

6. Procédé selon l'une des revendications 2 à 5,
**caractérisé en ce que**
on interrompt l'exposition de l'ébauche (1) plusieurs fois pendant le processus d'attaque, à l'occasion de quoi on raccourcit les intervalles d'exposition successifs et/ou on prolonge les pauses d'exposition intermédiaires.

7. Procédé selon l'une des revendications 1 à 6,
**caractérisé en ce que**
on amène l'énergie d'activation à l'ébauche (1) par un apport de chaleur.

8. Procédé selon l'une des revendications 1 à 7,
**caractérisé en ce que**
avant l'attaque électrochimique, on soumet l'ébauche (1) à un prétraitement, à l'occasion de quoi on produit au moins sur la première face de l'ébauche des creux de départ pour les pores à produire par attaque.

9. Procédé selon la revendication 8, **caractérisé en ce que**
on produit les creux de départ en effectuant une préattaque avec un masque perforé.

10. Procédé selon la revendication 8, **caractérisé en ce que**
on produit les creux de départ avec des faisceaux laser.

11. Procédé selon l'une des revendications 1 à 10,
**caractérisé en ce que**
on produit un champ magnétique (B) qui traverse l'ébauche (1) essentiellement perpendiculairement à la direction de l'attaque.

12. Procédé selon la revendication 11, **caractérisé en ce que**
la densité de flux magnétique (B) diminue dans la direction de l'attaque.

13. Procédé selon l'une des revendications 1 à 12,
**caractérisé en ce que**
l'ébauche (1) est dopée avec un dopant présentant une concentration qui peut aller jusqu'à 10¹⁹ cm⁻³.

14. Procédé selon l'une des revendications 1 à 13,
**caractérisé en ce que**
l'ébauche (1) est dopée avec plusieurs dopants différents et des concentrations de dopant correspondantes.

15. Procédé selon l'une des revendications 1 à 14,
**caractérisé en ce que**
la concentration de dopant diminue dans la direction de l'attaque.

16. Procédé selon l'une des revendications 1 à 15,
**caractérisé en ce que**
des zones partielles de l'ébauche (1) sont dopées avec une concentration de dopant inférieure à 10¹⁶ cm⁻³.

17. Procédé selon l'une des revendications 1 à 16,
**caractérisé en ce que**
l'ébauche (1) est constituée en priorité de silicium.
